**Europäisches Patentamt**

**European Patent Office**

**Office européen des brevets**

(11) Veröffentlichungsnummer: **0 512 229 A2**

# EUROPÄISCHE PATENTANMELDUNG

(21) Anmeldenummer: **92104934.2**

(22) Anmeldetag: **21.03.92**

(51) Int. Cl.⁵: **B03B 9/06**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich (Seite 7 fehlt).

Ein Antrag gemäss Regel 88 EPÜ auf Hinzufügung einer Seite an die Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **06.04.91 DE 4111130**

(43) Veröffentlichungstag der Anmeldung:
**11.11.92 Patentblatt 92/46**

(84) Benannte Vertragsstaaten:
**BE CH DE ES GB LI NL**

(71) Anmelder: **Lindemann Maschinenfabrik GmbH Erkrather Strasse 401 W-4000 Düsseldorf 1(DE)**

(72) Erfinder: **Klomfass, Elmar Georg-Büchner-Strasse 60 W-4006 Erkrath(DE)**
Erfinder: **Kaldenbach, Erwin Berliner Strasse 58 W-4030 Ratingen(DE)**

(74) Vertreter: **Bergen, Klaus, Dipl.-Ing. et al Patentanwälte Dr.-Ing. Reimar König Dipl.-Ing. Klaus Bergen Wilhelm-Tell-Strasse 14 Postfach 260162 W-4000 Düsseldorf 1(DE)**

(54) **Verfahren und Anlage zum Aufbereiten eines Gemischs aus kleinkörnigen Gemischbestandteilen.**

(57) Um bei einem Verfahren zum Aufbereiten eines Gemischs von Sekundärrohstoffen, insbesondere aus Shredderschutt und/oder Elektronikschrott den Deponieanteil erheblich zu verringern, werden zum Aufbereiten eines kleinkörnigen Gemischs (Korngröße ≦ 12 mm) in einer ersten Stufe spezifisch leichtere Gemischbestandteile von spezifisch schwereren getrennt und ausgeschieden, in einer zweiten Stufe aus dem Gemisch mit den spezifisch schwereren Bestandteilen Drähte entfernt, in einer dritten Stufe NE-Metalle aus dem Gemisch mit den spezifisch schwereren Bestandteilen abgeschieden und schließlich die NE-Metalle nach Leicht- und Schwermetallen sortiert. Bei einer geeigneten Anlage ist einem Luftherd (3) ein NE-Abscheider (14) und diesem ein Leichtteilscheider (43) nachgeschaltet.

Fig. 1

Die Erfindung betrifft ein Verfahren und eine Anlage zum Aufbereiten eines Gemischs von Sekundärrohstoffen, insbesondere aus Shredderschutt und/oder Elektronikschrott.

Das Aufbereiten und gegebenenfalls Zurückgewinnen von kleinkörnigen, wertvollen Materialien, wie sie insbesondere im Autoshredderschutt oder im Elektronikschrott wie beim Recycling von Katalysatoren, bei dem in Rede stehenden Gemisch auch nach dem Durchlaufen von vorgeschalteten Sortier- und Klassierstufen in der Kornfraktion von 0 bis 12 mm noch in großen Mengen anfallen, ist mit bekannten Trennvorrichtungen bzw. -verfahren - wenn überhaupt - äußerst schwierig und allenfalls mit einem sehr großen Aufwand möglich. Bedingt durch seine Feinheit setzt sich das kleinkörnige Gemisch ganz anders als Gemische aus grobkörnigem Material zusammen und enthält Kunststoffe, Gummi, Lack, Rost, Glas (die gesamte Glasfraktion aus Sekurit zerspringt beim Shreddern in sehr kleine Teile mit den genannten Korngrößen), Lampengläser, Sicherungsporzellan, Steine, Fe- und NE-Metalle, Drahtstücke, Stifte oder dergleichen, sowie darin gebundene Flüssigkeiten, z.B. Bremsflüssigkeit und/oder Öle.

Das Material mit der genannten Zusammensetzung wird daher bisher hinter dem Shredder, noch vor einer Fe-Magnetscheidung, abgesiebt und auf die Mülldeponie gegeben. Das bedeutet nicht nur einen erheblichen Verlust an in diesem - wie "Dreck" aussehenden - Materialgemisch enthaltenen Wertstoffen, sondern erfordert in Anbetracht der Schadstoffbelastung dieser Gemischbestandteile, z.B. durch anhaftende Öle oder sonstige schädliche Flüssigkeiten, das Verbringen auf eine Sondermüll-Deponie mit extrem hohen Endlagerungskosten. Im Zuge der seit vielen Jahren intensiven Bemühungen, möglichst alle Wertstoffe zurückzugewinnen und Sondermüll zu vermeiden, konnte trotz vieler Anstrengungen das Problem bei den genannten Gemischen mit den kleinkörnigen Bestandteilen nicht befriedigend gelöst, d.h. kein Verfahren zur wirtschaftlichen Wiederverwendung der in einem solchen Gemisch enthaltenen Stoffe gefunden werden. So hat sich beispielsweise ein sogenannter Zick-Zack-Sichter als nicht geeignet herausgestellt, der auf der Basis der bei verschiedenen spezifischen Gewichten unterschiedlichen Flugfähigkeit der Gemischbestandteile arbeitet. Da nämlich in dem luftdurchströmten Sichter auch die ein höheres spezifisches Gewicht aufweisenden Gemischbestandteile aufsteigen, und zwar dann, wenn es sich um flächige Gemischbestandteile handelt, und runde Gemischbestandteile nach unten fallen, selbst wenn sie ein spezifisch niedrigeres Gewicht besitzen, läßt sich damit keine gewünscht saubere Trennung erreichen. Ferner besitzen die enthaltenen Glas- und Aluminiumteilchen etwa gleiche Dichte, so daß auch dieses Gemisch nicht in Schwerkraftscheidern zu trennen ist.

Der Erfindung liegt die Aufgabe zugrunde, ein Verfahren und eine Anlage zum Aufbereiten des eingangs genannten Gemischs zu schaffen, die es ermöglichen, den Deponieanteil erheblich zu verringern und weitere Wertstoffe zurückzugewinnen.

Diese Aufgabe wird bei einem Verfahren erfindungsgemäß mit den im Patentanspruch 1 angegebenen Maßnahmen gelöst. Wie Versuche gezeigt haben, lassen sich in der ersten Trennstufe aus dem kleinkörnigen Shredderschutt- und/oder Elektronikschrottgemisch die darin zu einem großen Anteil enthaltenen, brennbaren Gemischbestandteile wie Holz, Gummi, Stoff- und Polsterreste sowie Kunststoffe nahezu vollständig abtrennen und z.B. einer Verbrennung zuführen. Es verbleibt eine etwa lediglich noch 50% der Ausgangsmenge ausmachende Schwerfraktion, die neben Drähten Gemischbestandteile mit kubischem Korn enthält, im wesentlichen NE-Metall sowie Glas und Steine. Sofern noch Fe in dem Gemisch enthalten sein sollte, müssen die Fe-Bestandteile vor der NE-Abscheidung abgetrennt werden. Dabei ist es gleich, an welcher Stelle im Verfahrensablauf das Fe abgetrennt wird, jedoch vor der NE-Abscheidung.

Wenn vor der NE-Abscheidung aus dem Gemisch mit den spezifisch schwereren Bestandteilen Draht und/oder Glas entfernt wird, lassen sich die anfallenden Mengen Sondermüll noch kleiner halten und die wertvollen und/oder weiter zu behandelnden Bestandteile noch definierter abtrennen. Denn in dem beschriebenen, kleinkörnigen Gemisch ist - im Gegensatz zu den großkörnigen Fraktionen mit Korngrößen über 12 mm - auffallend viel Glas enthalten, das sich nach dem Abtrennen, wie beispielsweise auch Steine oder mit diesen Materialien vergleichbare Gemischbestandteile, als Inertmaterial z.B. im Straßenbau verwenden läßt und dann ebenfalls nicht auf eine Deponie verbracht werden muß. Diese Teile weisen nur noch sehr minimale schädliche Anhaftungen auf und können gegebenenfalls durch eine Wäsche gereinigt werden.

Schließlich läßt sich der Abfallanteil noch weiter verringern und entsprechend der zurückzugewinnende Anteil wertvoller Stoffe weiter dadurch steigern, daß die im Autoshredderschutt oder im Elektronikschrott in Form von Drahtstücken, Stiften oder dergleichen auch nach dem Durchlaufen von vorgeschalteten Sortier- und Klassierstufen in der Kornfraktion bis 12 mm noch vorhandenen Drähte entfernt werden. Die Drähte können beispielsweise aus dem Gemisch mit den spezifisch schwereren Bestandteilen durch Bürsten abgetrennt und somit unnötige metallische Verluste vermieden werden.

Wenn die NE-Metalle nach Leicht- und Schwermetallen sortiert, z.B. aus dem vorwiegend aus Kupfer, Zink, Messing, Magnesium und Aluminium bestehenden Gemisch leichte NE-Metalle, wie Aluminium und/oder Magnesium, von schweren NE-Metallen, wie Kupfer und Kupferlegierungen, getrennt werden, lassen sich die verschiedenen Materialien vereinzeln.

Wenn das Gemisch einen Anteil von für die Anlage nicht geeignetem Überkorn enthält bzw. wenn für großkörnigere Gemische in vertretbarer Entfernung keine geeignete Aufbereitungsanlage vorhanden ist, kann der erfindungsgemäßen Anlage eine Zerkleinerungsvorrichtung vorgeordnet werden. Dadurch können einerseits auch solche Gemische verarbeitet werden und andererseits kann damit verhindert werden, daß solche Gemische mangels einer Aufbereitungsmöglichkeit zur Sonderdeponie gebracht werden müßten.

Bei einer Anlage zum Aufbereiten des erwähnten, sehr speziellen, gesiebten, kleinkörnigen Gemischs ist einem Luftherd ein NE-Abscheider und diesem ein Leichtteilscheider nachgeschaltet. Es hat sich herausgestellt, daß die brennbaren, spezifisch leichteren Gemischbestandteile mit einer Schüttdichte von etwa unter 1 $t/m^3$ in einem Luftherd als obenschwimmende Fraktion abgeschieden werden. Da ein Luftherd, der zum Trennen von Materialien bekannt ist, dabei gleichzeitig eine Staubfraktion nach oben ausbläst, sollte er vorteilhaft mit einer Staubabsaugung versehen sein. Auf jeden Fall läßt sich somit eine Schwerfraktion sauber abtrennen, da ihre Bestandteile eine erheblich größere Schüttdichte als die spezifisch leichteren Gemischbestandteile aufweisen.

Dem NE-Abscheider läßt sich als Leichtteilscheider beispielsweise ebenfalls ein Luftherd oder ein zum Trockensortieren der Bestandteile von NE-Metallen bekanntes Trennbett nachschalten. Auf diese Weise lassen sich im Anschluß an die NE-Abscheidung gezielt Aluminium, Magnesium, Kupfer etc. aussortieren, d.h. voneinander trennen.

Da aber vor allem Aluminium und Glas in etwa eine gleiche spezifische Dichte besitzen, lassen sich diese Bestandteile in dem Luftherd nicht wie gewünscht voneinander trennen. Sofern das in dem hier behandelten, speziellen Gemisch in auffallend großer Menge enthaltene Glas durch geeignete Maßnahmen nicht schon früher entfernt wird, wozu vorzugsweise einem im Förderweg des Gemischs angeordneten Beschleunigungsband eine Prallwand gegenüberliegen kann, von der Glas beim Auftreffen weiter zurückspringt als NE-Metalle oder Steine, wird das Glas - und andere in dem Gemisch noch enthaltene, nichtmetallische Materialien - spätestens bei Erreichen des NE-Abscheiders von den NE-Metallen getrennt.

Derartige NE-Abscheider (vgl. die DE-OS 39 09 499), bei denen z.B. ein Wechselmagnetfeld mittels eines Induktors oder mittels eines Magnetrotors erzeugt wird, erlauben es, die sogenannte Wirbelstromscheidung von nichtmagnetisierbaren, elektrisch gut leitfähigen Metallen durchzuführen. Das Aufgabegut kann dabei beispielsweise auf einem Fördergurt oder im freien Fall über die Pole des Wechselmagnetfelderzeugers geführt werden. In den elektrisch leitfähigen Bestandteilen der zu trennenden Mischung werden Wirbelströme induziert, die eigene, dem Erzeugerfeld entgegengerichtete Magnetfelder aufbauen und dadurch diese Bestandteile durch elektromagnetische Kräfte relativ zu den übrigen Bestandteilen der Mischung beschleunigen. Durch Wirbelstromscheidung lassen sich nicht ferromagnetische, elektrisch gut leitfähige Stoffe somit hervorragend von Steinen, Glas, Porzellan etc. trennen. Als Wechselmagnetfelderzeuger eignet sich für das sehr kleinkörnige Gemisch insbesondere ein Induktorscheider; alternativ läßt sich aber auch ein Permanentmagnetscheider einsetzen.

Mit einem im Förderweg des Gemischs angeordneten, dem NE-Abscheider vorgeschalteten Magnetscheider lassen sich ferromagnetische Teile vorab entfernen.

Es empfiehlt sich, daß im Förderweg des Gemischs ein Drahtausleser angeordnet ist, mit dem sich Langteile, wie ummantelte oder blanke Drahtstücke, Stifte oder dergleichen, noch vor dem Erreichen des NE-Abscheiders aus dem Gemisch abtrennen lassen. Zu diesem Zweck kann ein Drahtausleser eingesetzt werden (vgl. die ältere Patentanmeldung P 40 41 529.5), der aus einer Schwingrinne und zumindest einer ihrer Breite angepaßten Bürste besteht. Bei einer Schwing- bzw. Vibrationsrinne ergibt sich während der Zuführschaltet sind und vorzugsweise eine Schwingrinne als Zuführförderer vorgeschaltet ist, läßt sich neben der schon mit lediglich einem Luftherd und einem NE-Abscheider zu erreichenden Verringerung des Sondermüllanteils um 50% außerdem eine selektive Rückgewinnung der wertvollen Materialbestandteile des Gemischs erreichen.

Weitere Merkmale und Vorteile der Erfindung ergeben sich aus den Ansprüchen und der nachfolgenden Beschreibung der beigefügten Zeichnungen, in der einige Ausführungsbeispiele des Gegenstandes der Erfindung näher erläutert werden. Es zeigen:

Fig. 1 eine schematisch im Fließschema dargestellte, einen Luftherd und einen NE-Abscheider aufweisende Anlage zum Aufbereiten eines kleinkörnigen Gemischs;

Fig. 2 die Anlage gemäß Fig. 1 mit im Förderweg zwischen dem Luftherd und dem NE-Abscheider angeordneten Behandlungsstufen; und

Fig. 3 die Anlage gemäß Fig. 2 mit einer dem Luftherd vorgeschalteten Zerkleinerungsstufe.

Zum Verringern des Sondermüll-Anteils und Rückgewinnen der wertvollen und/oder wiederverwendbaren Bestandteile wird das erfindungsgemäß aufzubereitende, sich aus kleinkörnigen Bestandteilen mit einer Korngröße unter 12 mm zusammensetzende Gemisch A in einen Aufgabebunker 1 gefüllt, der es an eine Schwingrinne 2 abgibt, die für eine einlagige Zuführung sorgt und das Gemisch A kopfseitig in einen Luftherd 3 abwirft. In dem vorzugsweise eine Lochplatte mit 1 mm Löchern aufweisenden Luftherd 3 werden die in dem Gemisch A enthaltenen, spezifisch leichteren Gemischbestandteile nahezu völlig abgetrennt; bei diesen Bestandteilen handelt es sich um brennbare Materialien (Stoff- und Polsterreste, Holz, Gummi, Kunststoff etc.) im Shredderschutt und/oder Elektronikschrott, die als obenschwimmende Fraktion vom Luftherd 3 abgeschieden werden. Diese "Brennfraktion" kann z.B. in einer Müllverbrennung nahezu rückstandslos entsorgt werden. Die vom Luftherd 3 während des Betriebes nach oben ausgeblasene Staubfraktion wird mittels einer Staubabsaugung 4 aufgefangen und gesammelt; der Staub kann ebenfalls verbrannt oder als Sondermüll deponiert werden.

Während somit die spezifisch leichteren, brennbaren Gemischbestandteile gemäß Pfeil 5 aus dem Aufbereitungsprozeß entfernt und vor ihrer endgültigen Entsorgung in einem Behälter 6 gesammelt werden, gelangen die spezifisch schwereren Gemischbestandteile (NE-Metalle, Steine, Glas, Fe etc.) als Schwerfraktion auf eine dem Luftherd 3 in Materialflußrichtung nachgeschaltete, erste Schwingrinne 7, an deren Kopfende ein Magnetscheider (Magnettrommel) 8 unterhalb des Abwurfbereichs angeordnet ist; er trennt in dem Feststoffgemisch enthaltene Fe-Anteile ab, die gemäß Pfeil 9 in einen Sammelbehälter 11 gelangen.

Das somit von Fe-Anteilen befreite Gemisch gelangt gemäß Pfeil 12 auf eine in Materialflußrichtung dem Luftherd 3 nachgeschaltete, zweite Schwingrinne 13, die das im wesentlichen nur noch NE-Metalle, Steine, Glas und ähnliche Stoffe enthaltende Gemisch auf einen als Wechselmagnetfelderzeuger ausgebildeten NE-Abscheider weiterleitet; und zwar gibt die das Gemisch während des Transportes zum Abwurfende hin wiederum in der Höhe und der Breite vergleichmäßigende Schwingrinne 13 das Gemisch aus geringer Höhe auf einen Fördergurt 15 des NE-Abscheiders 14 ab. Der Fördergurt 15 arbeitet mit horizontalem Obertrum (Förderebene) und umschlingt eine unterhalb des Abgabeendes der Schwingrinne 13 angeordnete Antriebstrommel 16 und eine in Förderrichtung nachgeordnete Kopftrommel 17. Die Geschwindigkeit des Fördergurtes 15 kann dabei größer als die Fördergeschwindigkeit der Schwingrinne 13 sein, so daß dadurch das Gemisch zu einer einlagigen Schicht auseinandergezogen wird.

In der Trommel 17 ist ein das zum Trennen der NE-Metalle von den übrigen Gemischbestandteilen erforderliche Wechselmagnetfeld erzeugender - nicht dargestellter - Wechselmagnetfelderzeuger (Induktor) angeordnet. Aufgrund der im Materialabwurfbereich der Trommel 17 voll wirksamen Kraft des Wirbelstromes des Wechselmagnetfelderzeugers werden die NE-Metalle entsprechend dem Pfeil 18 stark ausgelenkt und fallen in eine von der Sammelstelle 19 für die gemäß Pfeil 21 im wesentlichen senkrecht nach unten fallenden übrigen Gemisch-Bestandteile getrennte, in Wurfrichtung nachgeordnete Sammelkammer 22. Mittels eines mit seiner Oberkante 23 nur wenig entfernt von der Außenfläche der Trommel 17 bzw. des Fördergurtes 15 im Materialabwurf endenden, somit weit oben liegenden, verstellbaren Scheitelblechs 24 wird die Trennung von den nicht wertvollen Nichtmetall-Bestandteilen unterstützt (vgl. die genannte DE-OS 39 09 499).

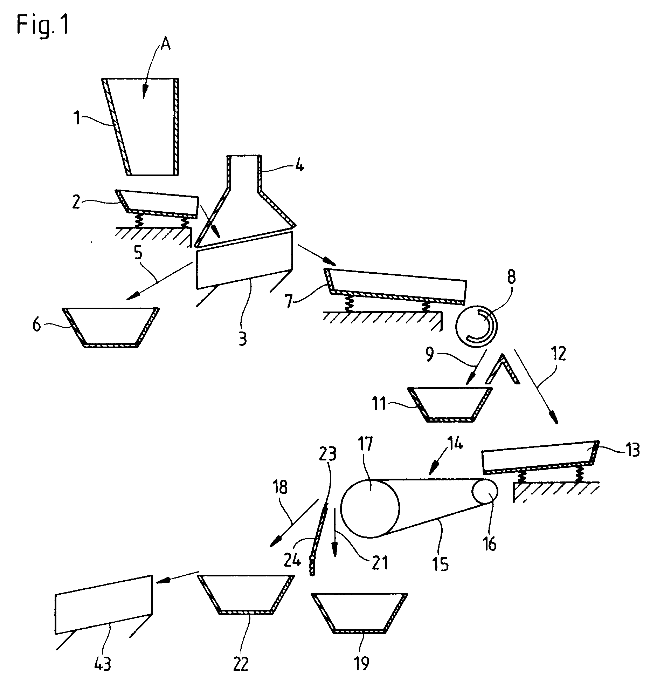

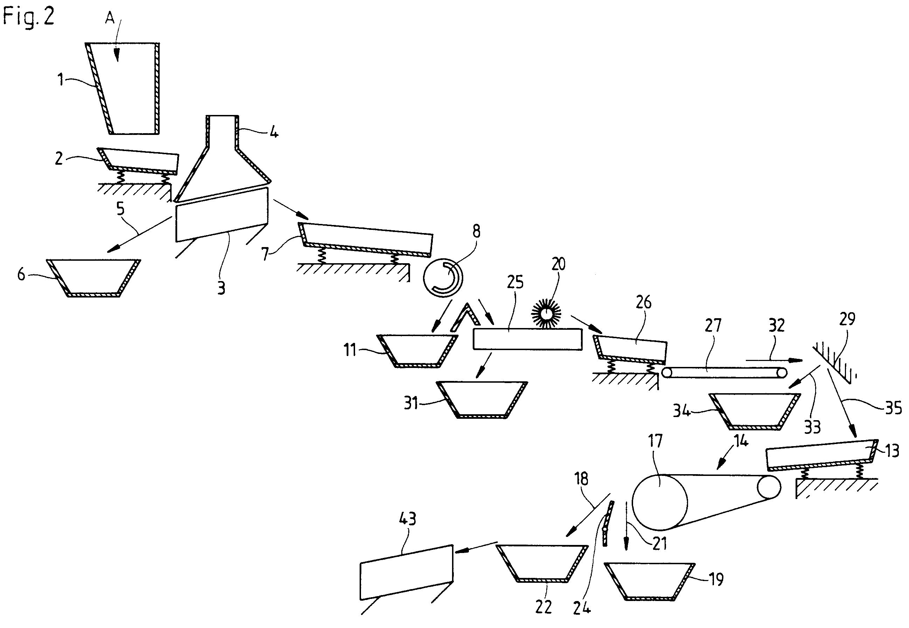

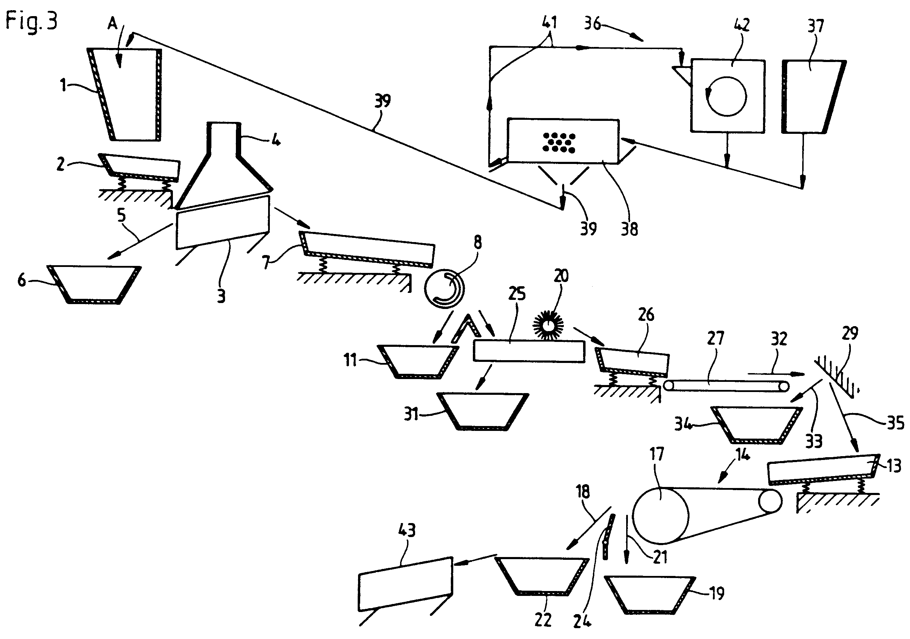

Die in den Fig. 2 und 3 dargestellten Anlagenkonzeptionen zum Aufbereiten eines kleinkörnigen Gemischs A unterscheiden sich vom grundsätzlichen Aufbau und den Funktionen nicht von der zuvor beschriebenen Anlage nach Fig. 1, so daß übereinstimmende Anlagenelemente bzw. Bauteile - selbst wenn diese bei der nachfolgenden Beschreibung der Anlagen nach den Fig. 2 und 3 nicht nochmals erwähnt sind - dieselben Bezugsziffern aufweisen.

Die Aufbereitungsanlage gemäß Fig. 2 besitzt neben dem zum Durchführen des erfindungsgemäßen Trennverfahrens eingesetzten Luftherd 3, dem NE-Abscheider 14 und dem Magnetscheider 8 außerdem einen in Materialflußrichtung zwischen dem Magnetscheider 8 und dem NE-Abscheider 14 angeordneten Drahtausleser 25, eine dritte Schwingrinne 26, der sich ein Beschleunigungsband 27 anschließt, dem am Kopfende eine Prallwand 29 (gegebenenfalls in Form einer Trommel) gegenüberliegt.

Das in den Drahtausleser 25 gelangende Gemisch ist in den vorgeschalteten Behandlungsstufen von der Brennfraktion sowie Fe-Anteilen befreit worden, und im Drahtausleser 25 werden - gemäß der zuvor genannten, älteren Anmeldung P 40 41 529.5 - die in dem Gemisch enthaltenen Langteile in Form von Drahtstücken, Stiften oder dergleichen durch Bürsten abgetrennt. Zu diesem Zweck kann einem Förderer mindestens eine, seiner Breite angepaßte Bürste 20 zugeordnet sein. Während das Gemisch unter der Bürste 20 durchläuft, nimmt diese die Langteile auf, während die übrigen Gemischbestandteile die Bürste 20 passieren, ohne zurückgehalten oder gestaut zu werden. Die somit zurückgewonnenen, wertvollen Drähte werden in einem Behälter 31 gesammelt. Wenn der unter der Bürste 20 angeordnete Förderer als Schwingrinne ausgebildet ist, was sich wegen der dann möglichen einlagigen Zuführung des Gemisches empfiehlt, könnte die sich gemäß Fig. 2 dem Drahtausleser 25 anschließende Schwingrinne 26 entfallen, so daß das von Drähten befreite Gemisch dann sogleich auf das Beschleunigungsband 27 gelangte.

Dem Kopfende des Beschleunigungsbandes 27 liegt mit Abstand die Prallwand 29 gegenüber. Beim Auftreffen der von dem Band 27 in Förderrichtung 32 beschleunigten Gemischbestandteile auf die Prallwand 29 prallen - wie Versuche gezeigt haben - insbesondere Glasteilchen gemäß Pfeil 33 aufgrund von der Prallwand 29 entgegen der Förderrichtung 32 zurück und fallen somit an einer von den übrigen Gemischbestandteilen deutlich entfernten Stelle herunter, z.B. in einen Sammelbehälter 34. Vor allem die NE-Metalle, aber z.B. auch Steine, tropfen hingegen im wesentlichen ohne Auslenkung von der Prallwand 29 gemäß Pfeil 35 nach unten ab, wo sie auf die dem NE-Abscheider 14 vorgeschaltete, zweite Schwingrinne 13 gelangen, die das von Glasteilen und ähnlichen Materialien zumindest teilweise befreite Feststoffgemisch dem NE-Abscheider 14 zuführt. Dort werden die NE-Metalle dann endgültig von - trotz der vorgeschalteten Behandlungsstufen - in dem Gemisch gegebenenfalls noch vorhandenen Glasteilen, Steinen etc. abgetrennt. Aufgrund der dem NE-Abscheider vorgeschalteten Behandlungsstufen (Drahtausleser 25 und Beschleunigungsband 27 mit Prallwand 29) wird der mit dem NE-Abscheider 14 zu erzielende Reinheitsgrad der abgetrennten Gemischbestandteile erhöht.

Die in Fig. 3 dargestellte Anlage unterscheidet sich von der Aufbereitungsanlage gemäß Fig. 2 lediglich durch eine der Trennstufe im Luftherd vorgeschaltete Material-Zerkleinerungsstufe 36, die es ermöglicht, daß in den Aufgabebunker 1 ein Gemisch mit nahezu gleicher Korngröße der Gemischbestandteile gelangt; denn das der erfindungsgemäßen Aufbereitung zuzuführende Gemisch wird aus einem Vorratsbunker 37 zunächst - z.B. mittels eines Förderbandes - in eine beispielsweise eine Lochung von 6 mm aufweisende Siebtrommel 38 befördert. Während die abgesiebten Gemischbestandteile - wie durch die Pfeile 39 angedeutet - sogleich in den Aufgabebunker 1 gefördert werden, gelangen die oberhalb der Abmessung der Sieblochung liegenden Gemischbestandteile als Überlauf gemäß den Pfeilen 41 zumindest noch einmal in einen Zerkleinerer 42 (Hammerbrecher, Spänebrecher, Schneidmühle, Schlagleistenrotor etc.), bis sie eine Korngröße erreicht haben, die die Lochung der Siebtrommel 38 passieren kann.

Eine Zerkleinerungsstufe 36 ermöglicht es, insbesondere auch solche Gemische der erfindungsgemäßen Aufbereitung zuzuführen, die keine für die Anlage erforderlichen, kleinen Korngrößen besitzen und sonst vollständig als Sondermüll entsorgt werden müßten. Bei sämtlichen Anlagenkonzeptionen lassen sich zudem die in dem NE-Abscheider 14 zurückgewonnenen NE-Metalle in einem Leichtteilscheider 43 (Luftherd, Trennbett) voneinander trennen, z.B. nach schweren und leichten Metallen, so daß sich gezielt beispielsweise Kupfer und Kupferlegierungen, Aluminium und/oder Magnesium zurückgewinnen lassen.

**Patentansprüche**

1. Verfahren zum Aufbereiten eines Gemischs von Sekundärrohstoffen, insbesondere aus Shredderschutt und/oder Elektronikschrott, dadurch gekennzeichnet, daß zum Aufbereiten eines kleinkörnigen Gemischs (Korngröße ≦ 12 mm) in einer ersten Stufe spezifisch leichtere Gemischbestandteile von spezifisch schwereren getrennt und ausgeschieden, in einer zweiten Stufe aus dem Gemisch mit den spezifisch schwereren Bestandteilen Drähte entfernt, in einer dritten Stufe NE-Metalle aus dem Gemisch mit den spezifisch schwereren Bestandteilen abgeschieden und schließlich die NE-Metalle nach Leicht- und Schwermetallen sortiert werden.

2. Verfahren nach Anspruch 1, dadurch gekennzeichnet, daß spätestens vor der NE-Abscheidung in dem Gemisch enthaltene Fe-Bestandteile abgetrennt werden.

3. Verfahren nach Anspruch 1 oder 2, dadurch gekennzeichnet, daß vor der NE-Abscheidung in dem Gemisch mit den spezifisch schwereren Bestandteilen enthaltenes Glas entfernt wird.

4. Verfahren nach einem oder mehreren der Ansprüche 1 bis 3, dadurch gekennzeichnet, daß das Gemisch vor der Aufbereitung zerkleinert wird.

5. Anlage zum Aufbereiten eines Gemischs von Sekundärrohstoffen, insbesondere aus Shredderschutt und/oder Elektronikschrott, dadurch gekennzeichnet, daß zum Aufbereiten eines kleinkörnigen Gemischs (Korngröße ≦ 12 mm) einem Luftherd (3) ein NE-Abscheider (14) und diesem ein Leichtteilscheider (43) nachgeschaltet ist.

**6.** Anlage nach Anspruch 5, gekennzeichnet durch einen Drahtausleser (25) zwischen dem Luftherd (3) und dem NE-Abscheider (14).

**7.** Anlage nach Anspruch 6, dadurch gekennzeichnet, daß der Drahtausleser (25) aus einer Schwingrinne (26) und mindestens einer ihrer Breite angepaßten Bürste (20) besteht.

**8.** Anlage nach einem oder mehreren der Ansprüche 5 bis 7, gekennzeichnet durch eine Staubabsaugung (4) des Luftherdes (3).

**9.** Anlage nach einem oder mehreren der Ansprüche 5 bis 8, gekennzeichnet durch einen im Förderweg des Gemisches (A) angeordneten, dem NE-Abscheider (14) vorgeschalteten Magnetscheider (8).

**10.** Anlage nach einem oder mehreren der Ansprüche 5 bis 9, dadurch gekennzeichnet, daß einem im Förderweg des Gemisches zwischen dem Luftherd (3) und dem NE-Abscheider (14) angeordneten Beschleunigungsband (27) eine Prallwand (29) gegenüberliegt.

**11.** Anlage nach einem oder mehreren der Ansprüche 5 bis 10, dadurch gekennzeichnet, daß dem Luftherd (3) ein Zerkleinerer (42) vorgeschaltet ist.

**12.** Anlage nach Anspruch 11, dadurch gekennzeichnet, daß dem Zerkleinerer (42) eine Siebtrommel (38) zugeordnet ist.

**13.** Anlage nach einem oder mehreren der Ansprüche 5 bis 12, dadurch gekennzeichnet, daß dem Luftherd (3) eine erste Schwingrinne (7), der Magnetscheider (8), der Drahtausleser (25), eine zweite Schwingrinne (13), das Beschleunigungsband (27) mit der Prallwand (29), eine dritte Schwingrinne (26) und der NE-Abscheider (14) in der angegebenen Reihenfolge nachgeschaltet sind.

**14.** Anlage nach Anspruch 13, gekennzeichnet durch eine Schwingrinne (2) als Zuführförderer vor dem Luftherd (3).

Fig.1

Fig. 2

EP 0 512 229 A2

Fig.3

EP 0 512 229 A2